# EUROPÄISCHE PATENTANMELDUNG

(11) **EP 3 792 709 A1**
(43) Veröffentlichungstag der Anmeldung: **17.03.2021**
(21) Anmeldenummer: 19196383.4
(22) Anmeldetag: 10.09.2019
(51) Int. Cl.: G05B 19/048

(54) **ANALYSEVORRICHTUNG FÜR BETRIEBSGERÄUSCHE EINER WERKZEUGMASCHINE**

(71) Anmelder: Avalance UG (haftungsbeschränkt), 78591 Durchhausen (DE)
(72) Erfinder: RÜTHER, JONAS SIMON, 78647 Trossingen (DE); HORSTMANN, JONAS BENEDICT, 78647 Trossingen (DE); HAUTMANN, Gerhard, 78315 Radolfzell (DE); LANDERER, TIMO, 79348 Freiamt (DE)
(74) Vertreter: Patentanwälte Behrmann Wagner PartG mbB

(57) **Zusammenfassung**

Die Erfindung betrifft eine Vorrichtung zur Analyse von Betriebsgeräuschen einer Werkzeugmaschine (1) zur Ermittlung eines Betriebszustands, insbesondere eines Verschleißzustands eines Werkzeugs (1a), aufweisend Erfassungsmittel (2) zur Aufnahme von in einem insbesondere materialabtragenden Arbeitszustand der Werkzeugmaschine (1) entstehenden Betriebsgeräuschen (3) und Bereitstellung darauf basierender Audiodaten, Analyseeinheit (4) zur elektronischen Verarbeitung des bereitgestellten Audiodaten mittels eines künstlichen neuronales Netzwerks (4b), welches zur Erkennung vordefinierter Betriebszustände basierend auf den bereitgestellten Audiodaten ausgebildet ist, Ausgabemittel (5) zur Ausgabe und/oder elektronischen Verarbeitung eines elektrischen Signals entsprechend eines ermittelten Betriebszustands.

## Beschreibung

Die vorliegende Erfindung betrifft eine Analysevorrichtung für Betriebsgeräusche einer Werkzeugmaschine. Insbesondere betrifft die Erfindung eine Analysevorrichtung zur Ermittlung eines Betriebszustands, insbesondere eines Verschleißzustands eines Werkzeugs der Werkzeugmaschine basierend auf Betriebsgeräuschen der Werkzeugmaschine mittels eines künstlichen neuronalen Netzwerks.

Ein gängiges Problem bei Werkzeugmaschinen, beispielsweise bei Schleifmaschinen oder zerspanenden bzw. materialabtragenden Maschinen, ist der auftretende Verschleiß der Maschine, insbesondere des Bearbeitungswerkzeugs der Maschine. Je nach Verschleißzustand wird ein zuvor definiertes Bearbeitungsresultat eines Werkstücks, beispielsweise ein definierter Materialabtrag, innerhalb einer bestimmten Bearbeitungszeit erzielt oder es kommt zu einer unerwünschten Abweichung. Speziell bei teil- oder vollautomatischer Bearbeitung und/oder bei zeitlich festgelegten Bearbeitungsschritten, beispielsweise im Falle einer Einbettung der Werkzeugmaschine in eine komplexere Fertigungsumgebung, kommt somit der Überwachung des Betriebszustands der Werkzeugmaschine, insbesondere des Verschleißzustands des Bearbeitungswerkzeugs, eine hohe Bedeutung zu.

Zur Adressierung dieses Problems wird üblicherweise auf betriebsspezifische Erfahrungswerte in Kombination mit manueller Überwachung seitens des Bedienpersonals zurückgegriffen, welches in vordefinierten zeitlichen Abständen einen Betriebszustand oder einen Verschleißzustand eines Werkzeugs kontrolliert und bei Bedarf regulierend eingreift bzw. einen Austausch des Werkzeugs vornimmt. Nachteilig an diesem Vorgehen sind der notwendige wiederkehrende Eingriff in den Fertigungsprozess und der jeweils damit verbundene zeitliche Ausfall der Werkzeugmaschine sowie eine hohe Ungenauigkeit in der Beurteilung des Betriebszustands der Maschine.

Beispielsweise erfolgt bei einer Überwachung einer Abnutzung eines Schleifbandes in einer Schleifmaschine eine Überprüfung des Schleifbandes entweder extern auf einem Prüfstand oder mittels eines speziellen Testwerkstücks. Auch können Maschinenmechaniker mit langjähriger Erfahrung teilweise durch die wahrnehmbaren Betriebsgeräusche beim Schleifen wenigstens darauf schließen, wenn das Schleifband einen sehr hohen Abnutzungsgrad erreicht hat, dies ermöglicht jedoch keine genaue und reproduzierbare Einschätzung des Betriebszustands. Bei anderen zerspanenden bzw. materialabtragenden Fertigungsprozessen wie Bohren, Drehen oder Fräsen, erfolgt üblicherweise eine Entnahme des Werkzeugs aus der Maschine mit anschließender visueller Inspektion mittels eines Mikroskops.

Neben den manuellen Überwachungsmechanismen ist es zudem bekannt eine Werkzeugmaschine mittels speziell darauf abgestimmter und an ihr angebrachter Sensorik zu überwachen, auch im Rahmen einer Prädiktiven Instandhaltung ("Predictive Maintenance"). Hierbei werden eine Vielzahl von Sensoren zur Aufnahme und Überwachung beispielsweise eines Motorstroms, der Rotationsgeschwindigkeit und des Körperschalls zur Betriebszustandsüberwachung an der Maschine angeordnet. Nachteilig an derartigen Überwachungssystemen sind die notwendige aufwendige Nachrüstung der Sensorik an der Maschine sowie die Beschränkung auf einen bestimmten Maschinentyp.

Aufgabe der vorliegenden Erfindung ist es, eine Vorrichtung zur Analyse von Betriebsgeräuschen einer Werkzeugmaschine zur Ermittlung eines vorzugsweise vordefinierten Betriebszustands bereitzustellen, welche die vorgenannten Nachteile des Standes der Technik überwindet oder zumindest deutlich abschwächt. Die zugrundeliegende Aufgabe wird durch die Vorrichtung und das Verfahren mit den Merkmalen der unabhängigen Ansprüche gelöst. Vorteilhafte Weiterbildungen der Erfindung sind in den Unteransprüchen beschrieben.

In einem ersten Aspekt betrifft die vorliegende Erfindung eine Vorrichtung zur Analyse von Betriebsgeräuschen einer Werkzeugmaschine zur Ermittlung eines Betriebszustands, insbesondere eines Verschleißzustands eines Werkzeugs, aufweisend Erfassungsmittel zur Aufnahme bzw. Erfassung von insbesondere in einem materialabtragenden Arbeitszustand der Werkzeugmaschine entstehenden Betriebsgeräusche und Bereitstellung darauf basierender Audiodaten, Analyseeinheit zur elektronischen Verarbeitung des bereitgestellten Audiodaten mittels eines künstlichen neuronales Netzwerks, welches zur Erkennung vordefinierter Betriebszustände basierend auf den bereitgestellten Audiodaten ausgebildet ist, und Ausgabemittel zur Ausgabe und/oder elektronischen Verarbeitung eines elektrischen Signals entsprechend eines ermittelten Betriebszustands.

Die Erfindung macht sich hierbei zunutze, dass die bei einem Betrieb einer Werkzeugmaschine auftretenden Betriebsgeräusche sich je nach Betriebszustand, insbesondere je nach Verschleißzustand eines verwendeten Werkzeugs der Werkzeugmaschine während der Bearbeitung eines Werkstücks verändern, unabhängig vom verwendeten Material des Werkstücks oder vom jeweiligen Bearbeitungsverfahren. Die Betriebsgeräusche von Werkzeugmaschinen tragen daher eine Vielzahl von Informationen, welche selbst für ein trainiertes menschliches Gehör nicht auswertbar sind. Diese Informationen können unter Zuhilfenahme des hierfür ausgebildeten bzw. angelernten künstlichen neuronalen Netzwerks analysiert und basierend darauf ein vordefinierter Betriebszustand hinreichend präzise und somit zuverlässig erkannt werden. Das künstliche neuronale Netzwerk greift hierbei auf erlernte Muster bei bekannten und/oder antrainierten Betriebszuständen zurück und kann so die erfassten Betriebsgeräusche einem Betriebszustand zuordnen.

Die vorliegende Erfindung stellt eine portable, eigenständige und einfach nachrüstbare Lösung bereit, welche vorzugsweise lediglich die zur Audioaufnahme ausgebildeten Erfassungsmittel benötigt. Die Vorrichtung ist zudem nicht auf einen einzelnen Maschinentyp begrenzt und daher universell einsetzbar. Des Weiteren kann mit der vorliegenden Erfindung eine Analyse bzw. Überwachung des Betriebszustands einer Werkzeugmaschine während einer laufenden Fertigung und somit ohne Unterbrechung des Fertigungsprozesses erfolgen.

Die erfassten Betriebsgeräusche sind vorzugsweise nur Luftschallsignale. Die erfassten Betriebsgeräusche umfassen vorzugsweise keine Körperschallsignale. Die erfassten Betriebsgeräusche sind vorzugsweise periodische bzw. wiederkehrende Schallsignale. Die aufgenommenen Betriebsgeräusche liegen vorzugsweise in einem Frequenzbereich von 5 bis 20.000Hz, mehr bevorzugt von 20 bis 20.000Hz.

Die Erfassungsmittel umfassen vorzugsweise wenigstens ein Mikrophon. Die Erfassungsmittel sind vorzugsweise zur Erfassung bzw. Aufnahme von Luftschall, insbesondere ein einem Bereich von 5 bis 20.000Hz, mehr bevorzugt von 20 bis 20.000 Hz ausgebildet. Die Erfassungsmittel und/oder die Analyseeinheit können zu einem Herausfiltern von nichtperiodischen akustischen Signalen, insbesondere von Störgeräuschen ausgebildet sein. Diese können beispielsweise menschliche Stimmen oder andere in der Fertigungsumgebung auftretende Geräusche umfassen.

Die zur Analyse vorgesehenen Betriebsgeräusche werden vorzugsweise in einem Arbeitszustand der Werkzeugmaschine erfasst, d.h. in einem Zustand in welchen die Werkzeugmaschine den jeweils an ihr vorgesehenen Bearbeitungsvorgang ausführt. Dies ist insbesondere ein materialabtragender bzw. zerspanender Arbeitszustand. Dies umfasst vorliegend insbesondere einen schleifenden Arbeitszustand der Werkzeugmaschine, d.h. eine Bearbeitung eines Werkstücks mittels eines auswechselbaren Schleifbands der Maschine. Ebenso umfasst ist vorliegend ein zerspanenden Zustand beim Drehen, Fräsen oder Bohren, d.h. eine Bearbeitung eines Werkstücks mit einem auswechselbaren Zerspanwerkzeug, insbesondere einem Drehmeißel, Fräser oder Bohrer.

Die Vorrichtung und/oder die Erfassungsmittel der Vorrichtung können weitere Sensorik oder zum Anschluss weiterer Sensorik ausgebildete Eingangsanschlüsse zur Bereitstellung weiterer Eingangssignale bzw. darauf basierender Daten umfassen, welche von der Analyseeinheit bei der Erkennung eines Betriebszustands herangezogen werden können. Beispielsweise kann die Vorrichtung einen Temperatur- und/oder Feuchtigkeitssensor umfassen, welcher eine Umgebungstemperatur und/oder -feuchtigkeit während der Aufnahme der Betriebsgeräusche detektiert.

Die Vorrichtung weist vorzugsweise ein einziges Gehäuse auf, in welchem alle Komponenten der Vorrichtung untergebracht bzw. integriert sind. Das Gehäuse ist vorzugsweise transportierbar und handlich ausgebildet, d.h. ohne größeren Kraftaufwand von einem menschlichen Benutzer bewegbar bzw. handhabbar. Das Gehäuse der Vorrichtung weist vorzugsweise eine Recheneinheit aufweisend die Analyseeinheit, vorzugsweise mit zugeordneten Speichermittel, die Erfassungsmittel, beispielsweise in Form eines Mikrophons, und die Ausgabemittel, beispielsweise in Form von wenigstens einem externen Anschluss und/oder wenigstens eine Kommunikationsschnittstelle auf. Das Gehäuse kann zudem ein integriertes Netzteil aufweisen. Die Erfassungsmittel und/oder weitere Sensorik der Vorrichtung können auch in mit dem Gehäuse verbindbaren zusätzlichen Bauteilen bzw. in einem oder mehreren separaten Gehäusen untergebracht sein. Auf diese Weise kann eine modular erweiterbare Vorrichtung bereitgestellt werden.

Die Analyseeinheit ist vorzugsweises ausgebildet, wenigstens zwei, mehr bevorzugt eine Vielzahl von vordefinierten Betriebszuständen voneinander zu unterscheiden. Insbesondere ist die Analyseeinheit ausgebildet wenigstens zwischen einem Normalzustand der Maschine, d.h. in welchem die Maschine innerhalb vorgegebener Sollparameter arbeitet, und einem außerhalb diesem liegenden Zustand der Maschine zu unterscheiden. Beispielsweise kann die Analyseeinheit ausgebildet sein, fehlerhafte Betriebszustände wie beispielsweise einen Getriebe- oder Motorfehlfunktion basierend auf den erfassten Betriebsgeräuschen zu erkennen.

Besonders bevorzugt ist die Analyseeinheit ausgebildet, wenigstens zwischen einem nicht-verschlissenen bzw. nicht-abgenutzten Betriebszustand der Werkzeugmaschine bzw. des Werkzeugs der Werkzeugmaschine und einem verschlissenen bzw. abgenutzten Betriebszustand der Werkzeugmaschine bzw. des Werkzeugs der Werkzeugmaschine zu unterscheiden. Der verschlissene Betriebszustand des Werkzeugs wird hierbei als Zustand verstanden, in welchem fast keine insbesondere schleifende oder materialabtragende Bearbeitung eines Werkstücks oder nur noch eine Bearbeitung mit vom Normalzustand deutlich abweichendem und relativ hohem Kraftaufwand möglich ist.

In einem weiteren bevorzugten Ausführungsbeispiel ist die Analyseeinheit ausgebildet, einen Abnutzungsgrad bzw. Verschleißgrad der Maschine zu ermitteln und bereitzustellen. Beispielsweise kann die Analyseeinheit derart ausgebildet sein, wenigstens zwischen einem neuwertigen, einem durchschnittlich abgenutzten und abgenutzten bzw. verschlissenen Abnutzungsgrad der Werkzeugmaschine zu unterscheiden bzw. den jeweiligen Abnutzungsgrad zu erkennen. Weiterhin bevorzugt ist die Analyseeinheit derart ausgebildet, eine Vielzahl, d.h. mehr als zwei, mehr bevorzugt mehr als drei, und am bevorzugtesten mehr als vier verschiedene Abnutzungs- bzw. Verschleißgrade zwischen einem neuwertigen und abgenutzten Werkzeugzustand bzw. Abnutzungsgrad zu unterscheiden. In einem besonders bevorzugten Ausführungsbeispiel ist die Analyseeinheit derart ausgebildet, einen kontinuierlich zurückgehenden Wert, beispielsweise einen prozentualen Wert für die Abnutzung bzw. den Verschleißgrad zu erkennen und/oder basierend auf dem jeweils erkannten Abnutzungs- oder Verschleißgrad zu ermitteln. Beispielsweise kann die Analyseeinheit ausgebildet sein, einen Abnutzungs- oder Verschleißgrad zwischen 0 und 100% zu erkennen und/oder zu ermitteln. Die Analyseeinheit kann auch derart ausgebildet sein, basierend auf dem erkannten Abnutzungsgrad einen idealen Zeitpunkt für einen Werkzeugwechsel zu berechnen und/oder eine verbleibende Zeit auszugeben, wie lange bei fortlaufender Fertigung mit dem verwendeten Werkzeug gearbeitet werden kann, bevor ein kritischer oder zu großer Abnutzungsgrad erreicht ist. Die Analyseeinheit kann beispielsweise bei Unterschreiten eines vordefinierten Abnutzungsgrads, zum Beispiel von 10%, einen Warnhinweis und/oder einen Hinweis auf einen notwendigen Werkzeugwechsel ausgeben.

Das künstliche neuronale Netzwerk ist vorzugsweise ausgebildet, Betriebszustände einer Werkzeugmaschine durch Vergleich und/oder durch statistische Auswertung bzw. Wahrscheinlichkeitsrechnung der von den Erfassungsmitteln bereitgestellten Audiodaten mit zuvor angelernten, Betriebszustände repräsentierenden, Audiodaten zu erkennen.

Insbesondere kann das künstliche neuronale Netzwerk ausgebildet sein, einen Abgleich des jeweiligen erfassten Betriebsgeräusches mit zuvor erkannten Geräuschen durchzuführen und basierend darauf eine Interpretation bzw. Erkennung des jeweiligen Betriebszustands beispielsweise mittels einer statistischen Auswertung vorzunehmen.

Das künstliche neuronale Netzwerk ist vorzugsweise derart ausgebildet, basierend auf mittels überwachten Lernens antrainierten Kenntnissen einen vordefinierten Betriebszustand zu ermitteln bzw. zu erkennen. Hierbei wird dem künstlichen neuronalen Netzwerk in an sich bekannter Weise durch antrainiertes Lernen bzw. dem sogenannten "supervised learning" eine Vielzahl von Betriebsgeräuschen entsprechend einem jeweiligen Betriebszustand zum Anlernen bereitgestellt.

Das künstliche neuronale Netzwerk kann zudem derart ausgebildet sein, eine vordefinierte Zielvorgabe, insbesondere durch entsprechende Ausgabe von Informations- und/oder Steuerungsdaten, zu verfolgen, welche auf mittels bestärkendem Lernen bzw. dem sogenannten "reinforcement learning" gewonnenen Kenntnissen basiert. Beispielsweise kann das künstliche neuronale Netzwerk ausgebildet sein, mittels bestärkendem Lernen gewonnene Kenntnisse hinsichtlich optimierter Bearbeitungs- und/oder Prozessparameter bereitzustellen, mit welchen unter Einhaltung vordefinierter Qualitätsstandards, insbesondere hinsichtlich eines zu bearbeitenden Werkstücks, die Betriebszeit eines Werkzeugs der Werkzeugmaschine maximiert bzw. die Abnutzung des Werkzeugs der Werkzeugmaschine minimiert werden kann. Mit anderen Worten erfolgt hierbei vorzugsweise unter Einhaltung vordefinierter Qualitätsstandards eine Optimierung der Bearbeitungs- und/oder Prozessparameter der Werkzeugmaschine, beispielsweise einer Drehzahl und/oder spezifischen Kontaktposition von Werkstück und Werkzeug, aufgrund der gewonnenen Erkenntnisse derart, dass eine möglichst lange Verwendung des jeweiligen Werkzeugs ohne Austausch erzielt wird. Hierbei kann das künstliche neuronale Netzwerk beispielsweise mittels der Ausgabemittel, insbesondere mittels einer Steuerungsschnittstelle zur Anbindung an eine Maschinensteuerung, optimierte Bearbeitungs- und/oder Prozessparameter an die Werkzeugmaschine bereitstellen.

Das künstliche neuronale Netzwerk kann zudem ausgebildet sein, zuvor angelernte Kenntnisse bei der fortlaufenden Ermittlung eines Betriebszustands aus den zugeführten Audiosignalen weiter zu verbessern. Das bedeutet, dass das künstliche neuronale Netzwerk selbstlernend ausgebildet ist und somit seine Kenntnisse während des Einsatzes an der zu überwachenden Werkzeugmaschine stetig erweitert bzw. verbessert.

Das künstliche neuronale Netzwerk ist vorzugsweise ein faltendes neuronales Netzwerk, d.h. ein sogenanntes "Convolutional Neural Network" (CNN) oder ein rekurrentes neuronales Netzwerk ("Recurrent neural network", RNN). Das künstliche neuronale Netzwerk weist vorzugsweise wenigstens eine verdeckte Schicht, eine sogenannte "hidden layer" auf. Das künstliche neuronale Netzwerk weist vorzugsweise zwischen 1 und 100, mehr bevorzugt zwischen 1 und 20 verdeckte Schichten auf. Das künstliche neuronale Netzwerk weist vorzugsweise zwischen 2 bis 10.000, mehr bevorzugt zwischen 2 und 1.000, Neuronen pro Schicht auf.

Die Analyseeinheit weist vorzugsweise eine Vorverarbeitungseinheit für die von den Erfassungsmitteln bereitgestellten Audiodaten auf, welche ausgebildet ist, die Audiodaten basierend auf vordefinierten Parametern elektronisch zu verarbeiten und dem künstlichen neuronalen Netzwerk zur weiteren Verarbeitung zuzuführen bzw. zur Verfügung zu stellen. Die Vorverarbeitungseinheit weist hierbei insbesondere Mittel auf, welche ein Normalisieren, ein Filtern, ein Aufteilen bzw. Zerschneiden und/oder eine Erstellung von Spektrogrammen basierend auf den bereitgestellten Audiodaten ermöglichen. Hierbei greift die Analyseeinheit vorzugsweise auf vordefinierte Parameter hinsichtlich des jeweiligen Vorverarbeitungsschrittes, wie beispielsweise Normalisieren, Filtern, Aufteilen, und/oder Spektrogrammerstellung, zurück. Diese können für den jeweiligen Vorverarbeitungsschritt und/oder für eine jeweilige zu überwachende bzw. analysierende Werkzeugmaschine unterschiedlich definiert sein. Vorzugsweise wird von der Vorverarbeitungseinheit bei der elektronischen Verarbeitung bzw. Vorbereitung der Audiodaten zur weiteren Verarbeitung durch das künstliche neuronale Netzwerk auf die gleichen Parameter zurückgegriffen, welche auch bei einem Anlernen des künstlichen neuronalen Netzwerks verwendet wurden. Diese entsprechen vorzugsweise Vorverarbeitungsparameter, welche im Rahmen des Anlernens des künstlichen neuronalen Netzwerks verwendet und/oder optimiert wurden.

Die Ausgabemittel weisen vorzugsweise eine Steuerungsschnittstelle zur Anbindung an eine Maschinensteuerung bzw. speicherprogrammierbare Steuerung (SPS) auf. Diese kann beispielsweise dazu ausgebildet sein, die Werkzeugmaschine bei Erkennung eines vordefinierten Betriebszustands entsprechend einer zuvor definierten Regelung anzusteuern. Beispielsweise kann bei Erkennung eines zu hohen Verschleißzustands des Werkzeugs der Maschine die Maschine gestoppt werden. Ebenfalls kann bei einer Erkennung eines überdurchschnittlichen Verschleißzustands, welcher aber dennoch innerhalb eines vordefinierten zulässigen Bereichs liegt, eine Erhöhung der Motordrehzahl der Maschine und/oder Erhöhung der Anpresskraft des Werkzeugs beispielsweise innerhalb vordefinierter Grenzen erfolgen, insbesondere um innerhalb einer gleichbleibenden Bearbeitungszeit ein definiertes Bearbeitungsresultat zu erzielen bzw. trotz dem erkannten hohen Verschleißzustand beizubehalten.

Die Ausgabemittel der Vorrichtung sind zur Ausgabe und/oder elektronischen Verarbeitung eines elektrischen Signals entsprechend eines ermittelten Betriebszustands ausgebildet. Unter elektrischem Signal wird hierbei jedes Signal verstanden, welches zur Bereitstellung bzw. Übertragung einer Information entsprechend einem ermittelten Betriebszustand geeignet ist. Das Signal kann von den Ausgabemitteln in eine für den Benutzer wahrnehmbare Information umgewandelt und/oder ausgegeben werden oder an eine externe Einheit zur weiteren Verarbeitung weitergeleitet werden.

Die Ausgabemittel können eine Kommunikationsschnittstelle zur Anbindung von Datenverarbeitungs- und/oder Darstellungsmittel aufweisen. Hierdurch kann basierend auf dem bereitgestellten, einem ermittelten Betriebszustand entsprechenden Signal eine Ausgabe, insbesondere eines akustischen und/oder visuellen Signals zu Informationszwecken an einen Benutzer erfolgen. Insbesondere können die Ausgabemittel ausgebildet sein, einen aktuellen Betriebszustand, insbesondere einen Verschleißzustand bzw. eine Qualität des Werkzeugs, und/oder eine verbleibende Betriebsdauer der Werkzeugmaschine vor Erreichung eines kritischen Verschleißzustands des Werkzeugs auszugeben. Die Ausgabemittel können auch ausgebildet sein, ein einem Betriebszustand entsprechendes Signal an einen externen Server und/oder ein externes Netzwerk bereitzustellen, welcher bzw. welches eine dem Betriebszustand entsprechende Information beispielsweise auf einer vom Benutzer einsehbaren Webseite hinterlegt.

Die Kommunikationsschnittstelle kann beispielsweise eine Netzwerkschnittstelle zur Anbindung von Datenverarbeitungs- und/oder Darstellungsmittel, beispielsweise einem Server, einem PC und/oder einem Smartphone, aufweisen. Die Kommunikationsschnittstelle kann zur Kommunikation mittels LAN, WLAN, Bluetooth etc. ausgebildet sein.

Die Ausgabemittel können zudem interne und/oder externe Speichermittel umfassen. Diese können gespeicherte Audiodaten und/oder statistische Daten zur Weiterverbreitung durch die Analyseeinheit oder durch mittels der Kommunikationsschnittstelle und/oder der Steuerungsschnittstelle der Ausgabemittel kommunizierenden Einheiten speichern.

In einem bevorzugten Ausführungsbeispiel weist die Analyseeinheit wenigstens zwei, vorzugsweise mehrere unterschiedliche ausgebildete künstliche neuronale Netzwerke auf. Diese sind vorzugsweise auf die Erkennung jeweils unterschiedlicher Arten von vordefinierten Betriebszuständen basierend auf bereitgestellten Audiodaten und/oder zur Analyse von unterschiedlichen Arten von Betriebsgeräuschen ausgebildet bzw. angelernt. Die Analyseeinheit kann beispielsweise ein neuronales Netzwerk aufweisen, welches auf die Verschleißerkennung eines Werkzeugs der Werkzeugmaschine angelernt ist. Zusätzlich kann die Analyseeinheit ein vorzugsweise parallel arbeitendes künstliches neuronales Netzwerk umfassen, welches auf die Erkennung eines normalen und abnormalen Betriebszustands des Getriebes oder des Motors der Werkzeugmaschine angelernt ist. In einem weiteren möglichen Ausführungsbeispiel kann die Analyseeinheit ein erstes künstliches neuronales Netzwerk aufweisen, welches für die Analyse von Betriebsgeräuschen einer Werkzeugmaschine im schleifenden Arbeitszustand, bspw. einer Schleifmaschine, ausgebildet bzw. angelernt ist. Zusätzlich kann die Analyseeinheit wenigstens ein zweites künstliches neuronales Netzwerk umfassen, welches für die Analyse von Betriebsgeräuschen einer Werkzeugmaschine im zerspanenden, insbesondere in einem fräsenden, drehenden oder bohrenden Arbeitszustand, bspw. einer Fräsmaschine, einer Drehmaschine oder einer Bohrmaschine, ausgebildet bzw. angelernt ist. Das jeweilige künstliche neuronale Netzwerk kann je nach Anwendungsfall bzw. zu überwachender Werkzeugmaschine basierend auf den bereitgestellten Audiodaten ausgewählt bzw. aktiviert werden.

In einem bevorzugten Ausführungsbeispiel weist die Analyseeinheit einen konfigurierbaren Trainingsmodus auf. In diesem erfolgt vorzugsweise eine Aufnahme verschiedener Betriebsgeräusche einer jeweiligen Werkzeugmaschine. Zudem kann eine manuelle oder automatische Zuordnung der Betriebsgeräusche zu einem jeweiligen Betriebszustand im Trainingsmodus erfolgen. Die Analyseeinheit kann auch derart ausgebildet sein, dass im Trainingsmodus ein vorzugsweise überwachtes Anlernen eines künstlichen neuronalen Netzwerks auf Basis verschiedener Betriebsgeräusche erfolgt, welche unterschiedliche Betriebszustände repräsentieren. Alternativ kann das eigentliche überwachte Anlernen eines künstlichen neuronalen Netzwerks basierend auf zuvor aufgenommenen Betriebsgeräuschen mit einer externen Recheneinheit erfolgen, beispielsweise mittels eines externen PCs, welcher selektiv mit der Vorrichtung verbindbar ist.

In einem weiteren Aspekt betrifft die vorliegende Anmeldung ein Verfahren zur Ermittlung eines Betriebszustands einer Werkzeugmaschine, insbesondere eines Verschleißzustands eines Werkzeugs der Werkzeugmaschine, aufweisend die Schritte:
- Aufnahme der in einem insbesondere materialabtragenden Arbeitszustand der Werkzeugmaschine entstehenden Betriebsgeräusche und Bereitstellung von darauf basierenden Audiodaten,
- elektronische Verarbeitung der bereitgestellten Audiodaten mittels eines künstlichen neuronalen Netzwerks, welches zur Erkennung vordefinierter Betriebszustände, insbesondere Verschleißzustände, basierend auf den bereitgestellten Audiodaten ausgebildet ist, und
- Ausgabe eines elektrischen Signals basierend auf der elektronischen Verarbeitung durch das künstliche neuronale Netzwerk und entsprechend einem detektierten Betriebszustand.

Bei dem erfindungsgemäßen Verfahren wird vorzugsweise auf ein künstlich neuronales Netzwerk zurückgegriffen, welches zuvor mittels überwachten Lernens angelernten wurde. Hierbei kann wie bereits oben bezüglich der Vorrichtung ausgeführt eine Aufnahme von einer Vielzahl von Betriebsgeräuschen einer jeweiligen Werkzeugmaschine und eine anschließende Zuordnung der jeweiligen Betriebsgeräusche zu einem vordefinierten Betriebszustand erfolgen, welche dann bei einem überwachten Anlernen in an sich bekannter Weise dem künstlichen neuronalen Netzwerk zugeführt werden.

In einem bevorzugten Ausführungsbeispiel umfasst der Schritt der elektronischen Verarbeitung eine Vorverarbeitung der bereitgestellten Audiodaten, bei welcher die Audiodaten auf Basis von vordefinierten Vorverarbeitungsparametern insbesondere normalisiert, gefiltert, aufgeteilt, und/oder zu Spektrogrammen verarbeitet werden. Die hierbei angewandten Vorverarbeitungsparameter entsprechen vorzugsweise Parametern, welche beim Anlernen des künstlichen neuronalen Netzwerks angewandt und/oder optimiert wurden.

In einer bevorzugten Ausführungsform erfolgen die elektronische Verarbeitung und die Ausgabe eines elektrischen Signals basierend auf der elektronischen Verarbeitung durch das künstliche neuronale Netzwerk in Echtzeit. Dies bedeutet insbesondere, dass eine Analyse der jeweiligen erfassten Betriebsgeräusche sofort und somit ohne Verzögerung erfolgt.

Zur Vermeidung von Wiederholungen wird auf die obige Beschreibung der erfindungsgemäßen Vorrichtung verwiesen. Insbesondere sollen die oben beschriebenen Merkmale der Vorrichtung auch als für das erfindungsgemäße Verfahren offenbart und beanspruchbar gelten und umgekehrt.

In einem weiteren Aspekt betrifft die vorliegende Erfindung ein Verfahren zum Anlernen und Bereitstellen eines künstlichen neuronalen Netzwerkes zur Ermittlung eines Betriebszustands einer Werkzeugmaschine, insbesondere eines Verschleißzustands eines Werkzeugs der Werkzeugmaschine, basierend auf Betriebsgeräuschen der Werkzeugmaschine, aufweisend die Schritte:
- Generierung von Trainingsdaten durch Aufnahme einer Vielzahl von unterschiedlichen Betriebsgeräuschen einer Werkzeugmaschine, insbesondere in einem materialabtragenden Arbeitszustand der Werkzeugmaschine, und manuelle oder automatische Zuordnung von auf den unterschiedlichen Betriebsgeräuschen basierenden Audiodaten zu vordefinierten Betriebszuständen, insbesondere hinsichtlich eines jeweiligen Verschleißzustands eines Werkzeugs der Werkzeugmaschine,
- elektronische Vorverarbeitung der Trainingsdaten mittels adaptierbarer Vorverarbeitungsparameter, wobei die Vorverarbeitung insbesondere ein Normalisieren, ein Filtern, ein Aufteilen und/oder eine Erstellung von Spektrogrammen basierend auf den bereitgestellten Audiodaten umfasst,
- Anlernen, vorzugsweise überwachtes Anlernen, eines künstlichen neuronalen Netzwerks definiert durch adaptierbare Hyperparameter mit den Trainingsdaten,
- Testen der antrainierten bzw. angelegten Kenntnisse des künstlichen neuronalen Netzwerks und Erfassung eines die Erkennungsgenauigkeit des künstlichen neuronalen Netzwerks wiederspiegelnden Werts,
- Variation der jeweiligen adaptierbaren Vorverarbeitungsparameter für die elektronische Vorverarbeitung und/oder Variation der jeweiligen adaptierbaren Hyperparameter des künstlichen neuronalen Netzwerks zur Optimierung der Erkennungsgenauigkeit,
- Auswahl und Bereitstellung eines künstlichen neuronalen Netzwerks basierend auf den jeweiligen ermittelten Erkennungsgenauigkeitswerten.

Das erfindungsgemäße Verfahren ermöglicht ein zuverlässiges vorzugsweise überwachtes Anlernen des künstlichen neuronalen Netzwerks mit Betriebsgeräuschen einer Werkzeugmaschine. Ebenso ermöglicht das Verfahren die Bereitstellung des resultierenden angelernten Netzwerks zur Verwendung in der Betriebszustandserkennung, insbesondere der Verschleißzustandserkennung, basierend auf Betriebsgeräuschen einer Werkzeugmaschine.

Die Generierung von Trainingsdaten erfolgt basierend auf einer Aufnahme einer Vielzahl von Betriebsgeräuschen und basierend auf einer vorzugsweise im Wesentlichen parallel durchgeführten Bestimmung des Betriebszustands, insbesondere eines Verschleißzustands des Werkzeugs. Die Betriebszustandsfeststellung basiert vorzugsweise auf einer indirekten Messung des Verschleißzustands des Werkzeugs. Insbesondere kann die Betriebszustandsfeststellung mit Hilfe eines genormten Werkstücks erfolgen, basierend auf dessen Abmaß-Veränderung nach einem vordefinierten Bearbeitungsschritt oder mehreren Bearbeitungsschritten ein aktueller Betriebszustand der Werkzeugmaschine und insbesondere ein Abnutzungszustand bzw. Abnutzungsgrad des Werkzeugs ermittelt werden kann. Beispielsweise kann für einen Schleifbearbeitungsprozess an einer Schleifmaschine ein Normwerkstück mit vordefinierten Abmaßen bereitgestellt werden, welches nach jedem Bearbeitungsschritt oder nach einer vordefinierten Mehrzahl von Bearbeitungsschritten, d.h. in vordefinierten Intervallen, abgemessen wird. Der jeweilige Abnutzungszustand wird dann den zugehörigen, beispielsweise davor aufgenommenen, Betriebsgeräuschen zugeordnet. Bei einer Zustandsfeststellung nach einer Mehrzahl von Bearbeitungsschritten mit der Maschine, kann der jeweilige Betriebszustand anhand der Messintervalle, zwischen denen dieser liegt, durch Interpolation festgestellt werden. Die Trainingsdaten werden vorzugsweise basierend auf einer Bearbeitung von wenigstens 2.000, mehr bevorzugt von wenigstens 5.000 und am bevorzugtesten von wenigstens 10.000 Werkstücken und den dabei erzeugten Betriebsgeräuschen erstellt. Die jeweilige Bearbeitungszeit der einzelnen Werkstücke und damit die Zeit der Maschine im materialabtragenden Arbeitszustand für die Erzeugung und Erfassung der Betriebsgeräusche liegt vorzugsweise bei wenigstens 0,5 Sekunden, mehr bevorzugt bei wenigstens 2 Sekunden, weiterhin bevorzugt bei wenigstens 5 Sekunden und am bevorzugtesten bei wenigstens 10 Sekunden.

Die Generierung von Trainingsdaten kann mit Hilfe der Vorrichtung wie oben beschrieben erfolgen, insbesondere in einem vorzugsweise selektiv anwählbaren Trainingsmodus der Vorrichtung.

Nach der Aufnahme der Betriebsgeräusche und der Zuordnung der darauf basierenden Audiodaten zu den jeweiligen Betriebszuständen erfolgt vorzugsweise eine Aufbereitung der Daten im Rahmen einer elektronischen Vorverarbeitung. Diese erfolgt vorzugsweise mittels einer hierfür ausgebildeten Software auf einem externen Rechner, beispielsweise einem PC, mit welchem die oben beschriebene Vorrichtung selektiv verbindbar ist. Die Software ist vorzugsweise ausgebildet, die erstellten Trainingsdaten von der Vorrichtung zu laden und basierend darauf die elektronische Vorverarbeitung, das Anlernen des künstlichen neuronalen Netzwerks, sowie ein Testen der angelernten Kenntnisse unter Variation verschiedener adaptierbarer Parameter, insbesondere der Vorverarbeitungsparameter und der Hyperparameter eines künstlichen neuronalen Netzwerks durchzuführen. Das hierbei bereitgestellte validierte bzw. getestete künstliche neuronale Netzwerk kann anschließend von der Software auf die oben beschriebene Vorrichtung geladen werden.

Im Rahmen der elektronischen Vorverarbeitung werden die Bereitgestellten Audiodaten vorzugsweise mit dafür ausgebildeten Plugins der Software verarbeitet. Hierbei kann insbesondere ein Normieren der Daten auf ein vordefiniertes Audiolevel, d.h. eine vorbestimmte Lautstärke, erfolgen. Auch kann ein Filtern der Audiodaten erfolgen. Hierbei können beispielsweise Nichtbetriebsgeräusche, Übersteuerungen und/oder Störungen etc. herausgefiltert werden. Auch kann ein Aufteilen bzw. ein sogenanntes Splitting der Daten in kürzere Zeitintervalle erfolgen. Ebenfalls kann ein Randomisieren der Daten erfolgen, bei welchem beispielsweise die zuvor aufgeteilten Audiodaten vermischt werden. Vorzugsweise erfolgt bei der Vorverarbeitung eine Spektrogrammerstellung basierend auf den jeweiligen Audiodaten, d.h. eine bildliche Darstellung des jeweiligen Frequenzspektrums eines Audiosignals, auf Basis welcher eine weitere Verarbeitung erfolgen kann.

Das Anlernen des künstlichen neuronalen Netzwerks erfolgt basierend auf den zuvor generierten Trainingsdaten und auf Basis der Daten, welche durch die elektronische Vorverarbeitung bereitgestellt werden. Hierbei kann zunächst grundsätzlich eine Topologie des künstlich neuronalen Netzwerks festgelegt werden, welche dann für das Anlernen genutzt wird, und welche beim anschließenden Testen des künstlichen neuronalen Netzwerks auf Erkennungsgenauigkeit überprüft wird. Beispielsweise kann in einem ersten Schritt ein vordefinierter Satz von Hyperparametern des künstlichen neuronalen Netzwerks zum Anlernen verwendet werden. Im Rahmen des Anlernens des Netzwerks kann zudem eine an sich bekannte Überprüfung der Gewichtungen innerhalb eines jeweiligen neuronalen Netzwerks mittels sogenannter Validierungsdaten erfolgen. Das daraus resultierende angelernte Netzwerk wird anschließend getestet, und basierend hierauf erfolgt eine Variation der Hyperparameter, um die Erkennungsgenauigkeit zu optimieren. Die adaptierbaren Hyperparameter des künstlichen neuronalen Netzwerks umfassen vorzugsweise insbesondere: die grundsätzliche Topologie bzw. Architektur des Netzwerks, beispielsweise CNN oder RNN, die Anzahl und Größer der Schichten, die Anzahl der Eingangs- und Ausgangs-Neuronen die Anzahl der versteckten Schichten, die genaue Vernetzung der Neuronen und Schichten, eine jeweilige Aktivierungsfunktion, und/oder die Vergesslichkeit des neuronalen Netzes, ein sogenanntes Dropout.

Nach dem Anlernen eines ersten künstlichen neuronalen Netzwerks mit einem vordefinierten ersten Parametersatz erfolgt ein Testen der antrainierten Kenntnisse. Dieses erfolgt vorzugsweise mit von den Trainingsdaten verschiedenen Testdaten, welches eine Vielzahl von unterschiedlichen Betriebsgeräuschen, vorzugsweise der gleichen Werkzeugmaschine wie zuvor zur Generierung der Trainingsdaten verwendet, und die jeweilige Zuordnung zu einem Betriebszustand umfassen. Mittels des Testens kann die Erkennungsgenauigkeit des zuvor trainierten Netzwerks ermittelt werden und ein diese wiederspiegelnder Wert ausgegeben werden.

Anschließend an diese Verfahrensschritte erfolgt eine, vorzugsweise iterative, Variation der jeweiligen adaptierbaren Parameter, insbesondere der Vorverarbeitungsparameter und der Hyperparameter des Netzwerks, um die Erkennungsgenauigkeit zu optimieren. Hierbei kann nach vordefinierten Mustern oder nach dem Trial-and-Error Prinzip vorgegangen werden. Die hierfür möglichen Verfahrensschritte zur Parameteroptimierung sind dem Fachmann bereits bekannt, vergleiche beispielsweise Artikel "Random Search for Hyper-Parameter Optimization" von James Bergstra und Yoshua Bengio im Journal of Machine Leraning Research 13 (2012) 281-305.

Die Software ist vorzugsweise ausgebildet eine Vielzahl von vordefinierten und/oder selektiv wählbaren Parametersätzen für die Vorverarbeitungsparameter und/oder die Hyperparameter zu variieren und basierend darauf die oben genannten Schritte der Vorverarbeitung, des Anlernens und des Testens durchzuführen. Die Software ist vorzugsweise ausgebildet eine jeweilige Erkennungsgenauigkeit für den jeweiligen Parametersatz auszugeben, um eine Auswahl eines optimierten Parametersatzes und somit eines optimierten künstlichen neuronalen Netzwerks für den jeweiligen Anwendungsfall zu ermöglichen. Das optimierte künstliche neuronale Netzwerk kann anschließend auf die oben beschriebene Vorrichtung geladen bzw. übertragen werden. Ebenfalls können hierbei der zugrundeliegende Parametersatz und insbesondere die Vorverarbeitungsparameter auf die Vorrichtung geladen bzw. übertragen werden.

Zur Vermeidung von Wiederholungen wird auf die obige Beschreibung der erfindungsgemäßen Vorrichtung und des Verfahrens zur Ermittlung eines Betriebszustands verwiesen. Insbesondere sollen die oben beschriebenen Merkmale der Vorrichtung und des Verfahrens zur Ermittlung eines Betriebszustands auch als für das erfindungsgemäßen Verfahren zum Anlernen eines künstlichen neuronalen Netzwerks offenbart und beanspruchbar gelten und umgekehrt.

Die erfindungsgemäße Vorrichtung und das erfindungsgemäße Verfahren sind nicht auf Werkzeugmaschinen, welche zur Materialabtragung mittels eines entsprechenden vorzugsweise austauschbaren Werkzeugs ausgebildet sind, beschränkt. Das zugrundeliegende Prinzip und die Auswertung bzw. Analyse mittels des künstlichen neuronalen Netzwerks kann ebenso zur Betriebszustandsermittlung bei weiteren Bearbeitungsverfahren, insbesondere von Werkzeugmaschinen in einem materialbearbeitenden Zustand, beispielsweise für nicht -spanabhebenden Bearbeitungsverfahren wie Biegen, Stanzen, Walzen, etc., verwendet werden.

Die Vorrichtung und das Verfahren eignen sich insbesondere zur Betriebszustandserkennung bei der Metallverarbeitung. Die Vorrichtung und das Verfahren sind jedoch nicht auf einen bestimmten zu bearbeitenden Werkstoff eines Werkstücks beschränkt.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in:
- **Fig. 1**: eine schematische Darstellung einer bevorzugten Ausführungsform der erfindungsgemäßen Vorrichtung;
- **Fig. 2**: eine perspektivische Aufsicht auf die Vorrichtung nach Fig. 1 mit schematisch dargestellten Komponenten;
- **Fig. 3**: eine Darstellung eines bevorzugten Trainingsprozesses für ein künstliches neuronales Netzwerk;
- **Fig. 4**: eine Darstellung eines Spektrogramms, welches während der Vorbereitung erstellt wird;
- **Fig. 5a-7c**: eine Darstellung von Daten bzw. Graphen erstellt beim Anlernen eines ersten beispielhaften künstlichen neuronalen Netzwerks für eine Betriebszustandserkennung einer Schleifmaschine;
- **Fig. 8**: eine Übersichtsdiagramm von verschiedenen antrainierten neuronalen Netzwerken gemäß Fig. 5a-7c und deren Erkennungsgenauigkeit;
- **Fig. 9a-11ceine**: Darstellung von Daten bzw. Graphen erstellt beim Anlernen eines ersten beispielhaften künstlichen neuronalen Netzwerks für eine Betriebszustandserkennung einer Zerspanmaschine, insbesondere einer Drehmaschine; und
- **Fig. 12**: eine Übersichtsdiagramm von verschiedenen antrainierten neuronalen Netzwerken gemäß Fig. 9a11c und deren Erkennungsgenauigkeit.

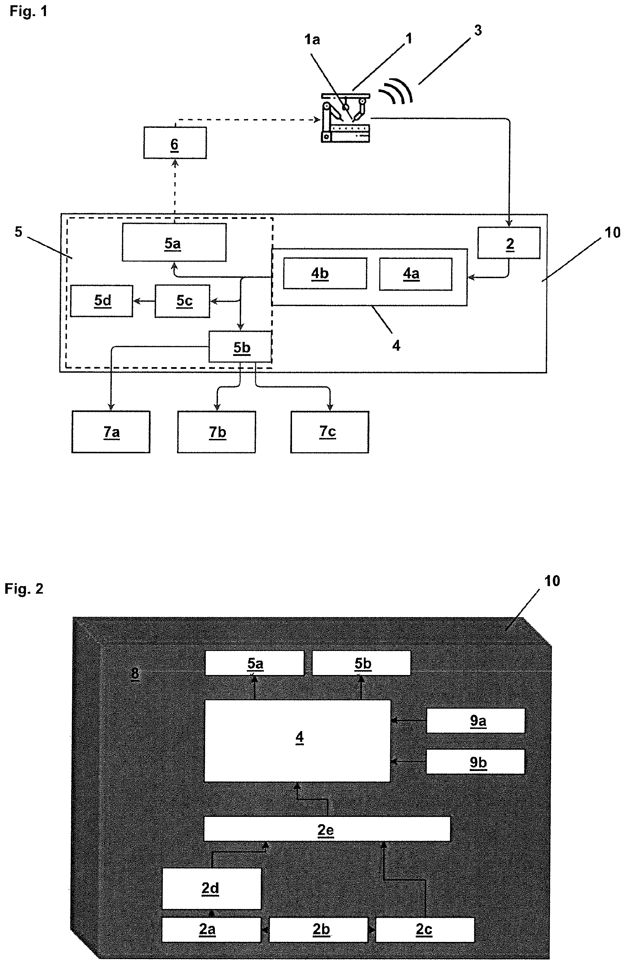

**Fig. 1** zeigt die erfindungsgemäße Vorrichtung 10 zur Analyse von Betriebsgeräuschen einer Werkzeugmaschine 1, welche dazu ausgebildet ist, basierend auf den analysierten Betriebsgeräuschen 3 einen Betriebszustand und insbesondere einen Verschleißzustand bzw. Abnutzungsgrad eines Werkzeugs 1a der Werkzeugmaschine zur erkennen bzw. zu ermitteln.

Die Vorrichtung 10 weist Erfassungsmittel 2 zur Erfassung bzw. zur Aufnahme von entstehenden Betriebsgeräuschen 3 der Werkzeugmaschine 1 auf. Die Erfassungsmittel 2 umfassen wenigstens einen Audio- bzw. Akustiksensor zur Erfassung von Luftschall. Die Erfassungsmittel 3 können ein analoges, digitales und/oder MEMS ("Microelectromechanical System") Mikrofon 2a, 2b, 2c (vgl. Fig. 2) umfassen. Die Erfassungsmittel 2 sind ausgebildet auf Basis der erfassten Betriebsgeräusche 3 Audiodaten auszugeben bzw. zur weiteren elektronischen Verarbeitung durch die Vorrichtung 10 bereitzustellen. Die Betriebsgeräusche 3 werden vorzugsweise in einem Arbeitszustand der Werkzeugmaschine 1 erfasst, in welchem insbesondere eine Bearbeitung eines Werkstücks durch das Werkzeug 1a in der Werkzeugmaschine 10, insbesondere durch Materialabtrag erfolgt. Die Analysevorrichtung 10 kann zudem auch die Betriebsgeräusche 3 außerhalb eines Arbeitszustands der Werkzeugmaschine 1 erfassen, beispielsweise um generell einen aktiven oder deaktivierten Betriebszustand der Maschine 1 erkennen zu können.

Die Vorrichtung 10 weist eine Analyseeinheit 4 auf, welche zur elektronischen Verarbeitung des bereitgestellten Audiodaten mittels eines künstlichen neuronales Netzwerks 4b ausgebildet ist. Die Analyseeinheit 4 umfasst hierbei ein künstliches neuronales Netzwerk 4b, welches in an sich bekannter Weise auf einer hierfür vorgesehenen Speichereinheit der Analyseeinheit 4 gespeichert ist. Das künstliche neuronale Netzwerk 4b ist ausgebildet, vordefinierte Betriebszustände basierend auf den bereitgestellten Audiodaten zu erkennen. Hierbei greift das künstliche neuronale Netzwerk 4b auf Kenntnisse zurück, welche im Rahmen eines Anlernens bzw. Antrainierens des künstlichen neuronalen Netzwerks gewonnen wurden.

Die Analyseeinheit 4 weist zudem eine Vorverarbeitungseinheit 4a für die von der Erfassungsmitteln 2 bereitgestellten Audiodaten auf, welche basierend auf vordefinierten Vorverarbeitungsparametern eine elektronische Vorverarbeitung der Daten durchführt. Die Vorverarbeitungsparameter wurden vorzugsweise bei einem zuvor durchgeführten Anlernen des künstlichen neuronalen Netzwerks 4b festgelegt und können auf einer zugehörigen Speichereinheit hinterlegt sein. Mittels der Vorverarbeitungsparameter kann insbesondere ein Normalisieren, ein Filtern, eine Aufteilung und/oder eine Spektrogrammerstellung auf Basis der bereitgestellten Audiodaten erfolgen. Die Vorverarbeitungsparameter legen hierbei insbesondere fest, welche Art von Vorverarbeitung der Audiodaten stattfindet und mit welchen Randbedingungen.

Die Analyseeinheit 4 ist ausgebildet, basierend auf den von dem künstlichen neuronalen Netzwerk 4b bereitgestellten Informationen über einen erkannten bzw. detektierten Betriebszustand der Maschine 1 ein entsprechendes Signal auszugeben.

Die Vorrichtung 10 umfasst weiterhin Ausgabemittel 5, welche zur Ausgabe und/oder elektronischen Verarbeitung eines elektrischen Signals entsprechend eines ermittelten Betriebszustands ausgebildet sind. Hierbei wird von der Analyseeinheit 4 basierend auf der von dem künstlichen neuronalen Netzwerk 4b bereitgestellten Information hinsichtlich eines erkannten bzw. detektierten Betriebszustands der Maschine 1 ein entsprechendes Signal an die Ausgabemittel 5 bereitgestellt, welches von diesen weiterverarbeitet und/oder weitergegeben werden kann.

Die Ausgabemittel 5 können eine Steuerungsschnittstelle 5a zur Anbindung an eine Maschinensteuerung 6 aufweisen. Hiermit kann eine Steuerung der Werkzeugmaschine 1 basierend auf den von der Analyseeinheit 4 bereitgestellten Informationen hinsichtlich eines ermittelten Betriebszustands erfolgen. Vorzugsweise weisen die Ausgabemittel 5 eine Kommunikationsschnittstelle 5b zur Anbindung an Datenverarbeitungs- und/oder Darstellungsmittel 7a,7b,7c auf. Diese können einen Datenserver, beispielsweise einen Cloud Server 7a, einen PC 7b und/oder ein Smartphone 7c umfassen. Ein Ergebnis der Analyseeinheit 4 bzw. ein erfasster Betriebszustand kann mittels der Kommunikationsschnittstelle 5b an die vorgenannten Datenverarbeitungs- und/oder Darstellungsmittel weitergegeben werden. Die Ausgabemittel 5 können zudem interne oder externe Speichermittel 5c,5d umfassen, mittels derer von der Analyseeinheit 4 bereitgestellte Daten und/oder Informationen gespeichert werden können, beispielsweise zur späteren statistischen Auswertung. Ebenfalls können die interne oder externe Speichermittel 5c,5d Informationen bzw. Daten der Analyseeinheit 4 bereitstellen.

**Fig. 2** zeigt eine perspektivische Aufsicht auf die Vorrichtung 10 mit schematisch dargestellten Komponenten. Die Vorrichtung 10 weist ein Gehäuse 8 auf, in welchem die Komponenten der Vorrichtung 10 untergebracht sind. Das Gehäuse 8 ist vorzugsweise quaderförmig und weist vorzugsweise eine Breite und Länge jeweils kleiner als 30cm auf. Eine Höhe der Vorrichtung ist vorzugsweise kleiner als 10cm. Die Vorrichtung 10 ist somit kompakt und einfach handhabbar ausgebildet, so dass diese auf einfach Art und Weise an einer Werkzeugmaschine 1 bzw. in der Nähe einer Werkzeugmaschine installierbar ist.

Die Erfassungsmittel 2 sind im Gehäuse 8 integriert und können ein analoges Mikrofon 2a, ein MEMS Mikrofon 2b und ein digitales Mikrofon 2c umfassen. Die Erfassungsmittel 2 umfassen zudem vorzugsweise einen Analog/Digital-Wandler 2d und ein zugeordnetes Audio-Schnittstelle 2e.

Die Analyseeinheit 4 kann mit weiteren Eingängen und/oder Datenquellen verbunden sein. Insbesondere kann die Analyseeinheit mit im Gehäuse 8 integrierten zusätzlichen Sensoren 9a verbunden sein. Diese können beispielsweise einen Temperatur- und/oder Feuchtigkeitssensor umfassen. Zudem kann das Gehäuse 8 zusätzliche Eingänge 9b zur Bereitstellung von weiteren Sensorsignalen und/oder weiteren Daten an die Analyseeinheit 4 aufweisen.

Die zuvor beschrieben Ausgabemittel 5, insbesondere eine Steuerungsschnittstelle 5a und eine Kommunikationsschnittstelle 5b zur Anbindung der Vorrichtung 10 an externe Geräte sind vorzugsweise ebenfalls im Gehäuse 8 integriert.

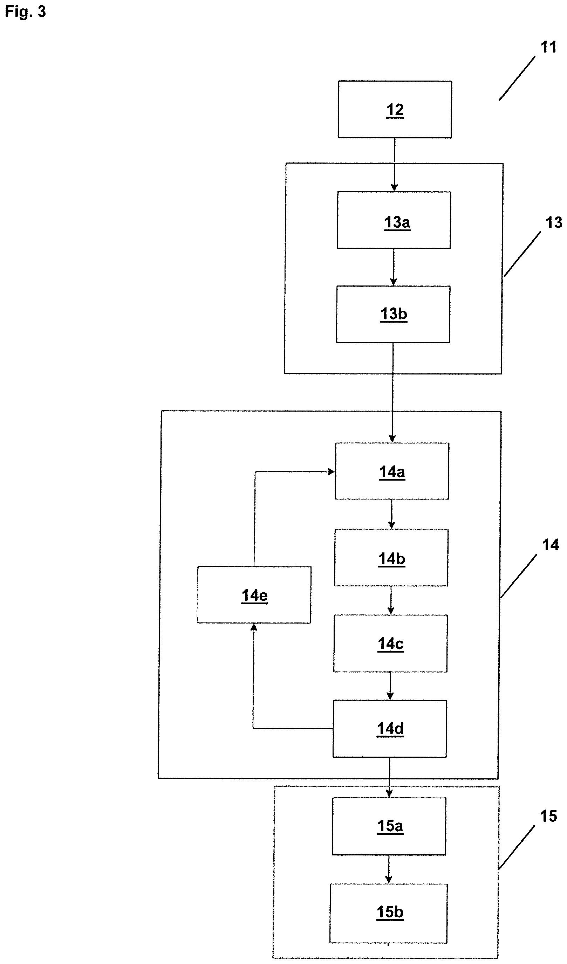

**Fig. 3** zeigt in einem Flussdiagram eine bevorzugte Ausführungsform eines Trainingsprozesses 11 zum Anlernen des künstlichen neuronalen Netzwerks 4b der Vorrichtung 10 zur Erkennung von Betriebszuständen basierend auf erfassten Betriebsgeräuschen 3 der Werkzeugmaschine 1, insbesondere zur Erkennung eines Abnutzungsgrads eines Werkzeugs 1a der Werkzeugmaschine basierend auf den Betriebsgeräuschen 3.

Dieser wird vorzugsweise für jede Art von Zerspanen bzw. jede Art von Materialabtrag separat und individuell durchgeführt. Insbesondere kann ein künstliches neuronales Netzwerk zur Erkennung von Betriebszuständen basierend auf Betriebsgeräuschen einer Schleifmaschine mittels des gezeigten Verfahrens an einer Schleifmaschine angelernt werden. Für eine Erkennung von Betriebszuständen basierend auf Betriebsgeräuschen bei hiervon verschiedenen zerspanenden Verfahren, insbesondere für ein Drehen, Fräsen und/oder Bohren erfolgt vorzugsweise ein separates Anlernen mittels einer jeweiligen Drehmaschine, Fräsmaschine und/oder Bohrmaschine.

Beim im Fig. 3 dargestellten Verfahren 11 erfolgen in einem ersten Schritt 12 zunächst Vorbereitungshandlungen. Diese können insbesondere ein Anordnen einer zur Aufnahme entsprechender Trainingsdaten konfigurierte Vorrichtung 10 an einer Werkzeugmaschine 1 umfassen. Diese wird derart an der Werkzeugmaschine 1 bzw. in deren Nähe installiert, dass diese die Betriebsgeräusche 3 der Werkzeugmaschine 1 zuverlässig erfassen bzw. aufnehmen kann.

In einem darauf folgenden zweiten Schritt 13 werden die Trainingsdaten zum Anlernen eines künstlichen neuronalen Netzwerks 4b generiert. Hierbei erfolgt eine Erfassung 13a einer Vielzahl von Betriebsgeräuschen insbesondere während eines Arbeitszustands der jeweiligen Werkzeugmaschine 1 und eine Zustandsbestimmung und Zuordnung 13b vom jeweiligen Betriebszustand der Maschine zu den erfassten Geräuschen.

Dies wird im Folgenden beispielhaft für eine Schleifmaschine (SHL-FKS-Bandschleifmaschine mit einer Kontaktrolle D 350 mm, 60 mm breit, Bezeichnung A100M) mit einem austauschbaren Schleifband (Länge von 3500 mm, eine Breite von 60mm, Material: Keramik, Korn 120 grün von Hermes) beschrieben. Die Maschine weist eine Bandgeschwindigkeit von 2050 U/min, einen Anpressdruck von 2,5 bar und eine Bandspannung von 2,9 bar auf.

Für die Generierung der Trainingsdaten wird zunächst der Schleifprozess an einem zu schleifendem Werkstück, insbesondere einem Serienwerkstück, unterbrochen. Danach wird ein hinsichtlich der Abmessungen definiertes Normstück von einem Roboter (Fanuc Roboter M710/50E), der die Werkstücke zum Schleifband führt, aufgenommen und die Länge gemessen. Anschließend führt der Roboter das Normstück eine vordefinierte Zeit, vorliegend 2:30 Min, lang über das Schleifband. Nach dem Schleifvorgang wird erneut die Länge des Normstückes gemessen. Die Längenmessungen führt der Roboter automatisch durch, indem das Normstück an einen hierfür geeigneten und an sich bekannten Messfühler führt. Die Differenz der Längen entspricht der Menge des abgetragenen Materials. Aus diesem Wert kann auf den jeweiligen Zustand des Schleifbands geschlossen werden. Vorliegend wird bei der Erfassung der Trainingsdaten ermittelt, dass der Abtrag bei einem neuen Schleifband in der vordefinierten Bearbeitungszeit 1,5 mm am Normstück beträgt, bei einem abgenutzten Schleifband beträgt dieser lediglich 0,5 mm. Diese Werte dienen zur Bestimmung des jeweiligen Ist-Betriebszustands der Werkzeugmaschine, insbesondere dem jeweiligen Verschleißzustand bzw. Abnutzungsgrads des Werkzeugs bzw. des Schleifbands.

Die oben beschriebene Erfassung des jeweiligen Ist-Betriebszustands bzw. Ist-Abnutzungsgrad durch Messung mit einem Normstück erfolgt nach einer vorgegebenen Anzahl von Bearbeitungen eines (Serien)Werkstücks, vorliegend in einem vorzugsweise gleichbleibenden Intervall zwischen 5-10 Werkstücken. Die jeweilige Bearbeitungszeit des Werkstücks kann beispielsweise bei 14 Sekunden liegen. Dazwischenliegende Ist- Abnutzungsgrade werden mittels Interpolation bestimmt. Der jeweilige Ist-Zustand der Werkzeugmaschine kann der erfindungsgemäßen Vorrichtung 10 mittels eines entsprechenden Eingangsanschluss elektronisch bereitgestellt werden. Die Vorrichtung 10 ist zudem mit einer SPS Steuerung 6 der Werkzeugmaschine 1 verbunden, um weitere Zustandsinformationen bereitzustellen.

Hierbei werden vorzugsweise die folgenden Zustände an die Vorrichtung zur Erfassung übermittelt:
- Aktivierung bzw. Start des Handhabungsroboters und Start der Werkstückbearbeitung (hierbei erfolgt entsprechender Aufnahmestart der Betriebsgeräusche)
- Ende der Werkstückbearbeitung (herbei erfolgt entsprechender Aufnahmestopp der Betriebsgeräusche)
- Messung Normstück und Zuordnung zu vorangegangener oder nachgelagerter Werkstückbearbeitung (hierbei erfolgt vorzugsweise keine Aufnahme der Betriebsgeräusche)
- erfasste Längenmessung des Normstücks zur jeweiligen Ist-Zustandsaufnahme

In der Vorrichtung 10 kann dann eine vorzugsweise automatische Zuordnung der jeweiligen erfassten Betriebsgeräusche 3, insbesondere im Bearbeitungszustand des Werkzeugs, zu den basierend auf den obigen Informationen generierten bzw. berechneten, jeweiligen Ist-Betriebszuständen erfolgen. Für eine ausreichende Generierung von Trainingsdaten können vorzugsweise wenigstens zwischen 3000 und 4000 Werkstücke bearbeitet bzw. Bearbeitungsschritte durchgeführt und die entsprechenden Betriebsgeräusche aufgenommen werden. Hierbei wurde beispielsweise in entsprechenden Versuchen ein fünfmaliger Austausch des Schleifbands aufgrund eines zu hohen Abnutzungsgrads vorgenommen.

Die so ermittelten Daten können in einer Speichereinheit der Vorrichtung 10 oder in einer zusätzlichen Speichereinheit oder Datenbank für die weitere Verwendung gespeichert werden.

Auf Basis der generierten Trainingsdaten erfolgt in einem weiteren Schritt 14 das Anlernen eines und vorzugsweise mehrerer künstlicher neuronaler Netzwerke mit den Trainingsdaten. Dieser Schritt wird vorzugsweise auf einem externen Rechner und mittels einer hierfür ausgebildeten Software durchgeführt. Die Trainingsdaten können der Software durch die Vorrichtung 10 bereitgestellt werden. Die Software ist vorzugsweise derart ausgebildet, dass diese verschiedenste Prozesse, Konfigurationen und Netzwerk Architekturen bzw. Topologien durchspielen bzw. ausführen kann und durch vorzugsweise iterative Variation der adaptierbaren Parameter optimieren kann. Vorzugsweise werden hierbei mehrere tausend verschiedene Kombinationen der adaptierbaren Parameter durchgeführt. Sie Software weist hierbei vorzugsweise eine Vielzahl von unterschiedlichen Plugings auf, welche selektiv kombiniert werden können. Insbesondere kann die Software sogenannte "Lader-Plugins" aufweisen, zur Bereitstellung der basierend auf Betriebsgeräuschen der Werkzeugmaschine erzeugten Daten. Diese können die zuvor generierten Trainingsdaten umfassen und von den Lader-Plugins aus einer Datenbank abgerufen werden. Ebenso kann mittels der Lader-Plugins eine Bereitstellung von Validierungs- oder Testdaten erfolgen. Bei den Testdaten handelt es sich vorzugsweise um Betriebsgeräusche, welche von der gleichen Werkzeugmaschine stammen, die allerdings von den Trainingsdaten verschieden sind. Mit diesen kann eine Bewertung bzw. Überprüfung der Trainingsdaten erfolgen, um die Aussagekraft der Auswertung zu optimieren.

Des Weiteren umfasst die Software vorzugsweise wenigstens ein Struktur-Plugin, ein Anlern- bzw. Trainings-Plugin, ein Modell-Plugin, und/oder ein Vorverarbeitungs-Plugin, welche vorzugsweise selektiv konfigurierbar und/oder kombinierbar sind. Das oder die Vorverarbeitungs-Plugin(s) und/oder das Trainings-Plugin können zudem weitere Plugins umfassen, welche die durch die Lader-Plugins bereitgestellten Daten basierend auf adaptierbaren Parametern elektronisch verarbeiten können.

Das Anlernen 14 umfasst vorzugsweise eine Definition bzw. Festlegung adaptierbarer Parameter 14a, insbesondere der Vorverarbeitungsparametern und der Hyperparametern eines künstlichen neuronalen Netzwerks. Hierbei können zunächst Standardparameter festgelegt werden, welche in einem später erfolgendem Schritt 14e variiert werden. Anschließend erfolgt eine elektronische Vorverarbeitung 14b der Trainingsdaten mittels der zuvor festgelegten adaptierbarer Vorverarbeitungsparameter, wobei die Vorverarbeitung insbesondere ein Normalisieren, ein Filtern, ein Aufteilen und/oder eine Erstellung von Spektrogrammen basierend auf den bereitgestellten Audiodaten umfassen kann.

Beispielhaft kann hierbei mittels eines entsprechenden Plugins der Software ein Normalisieren der erfassten Betriebsgeräusche bzw. der entsprechenden Audiodaten erfolgen, d.h. der maximale Geräuschpegel wird in allen Aufnahmen auf denselben Pegel gestellt und alle anderen Signale werden entsprechend angepasst. Dies ermöglicht eine bessere Verarbeitung durch das künstliche neuronale Netzwerk, wodurch Muster besser erkannt werden.

Zusätzlich kann ein Aufteilen der Audiodaten in kleinere Einheit mittels eines Splitter-Plugins der Software und/oder ein Randomisieren der Audiodaten mittels eines entsprechenden Plugins erfolgen.

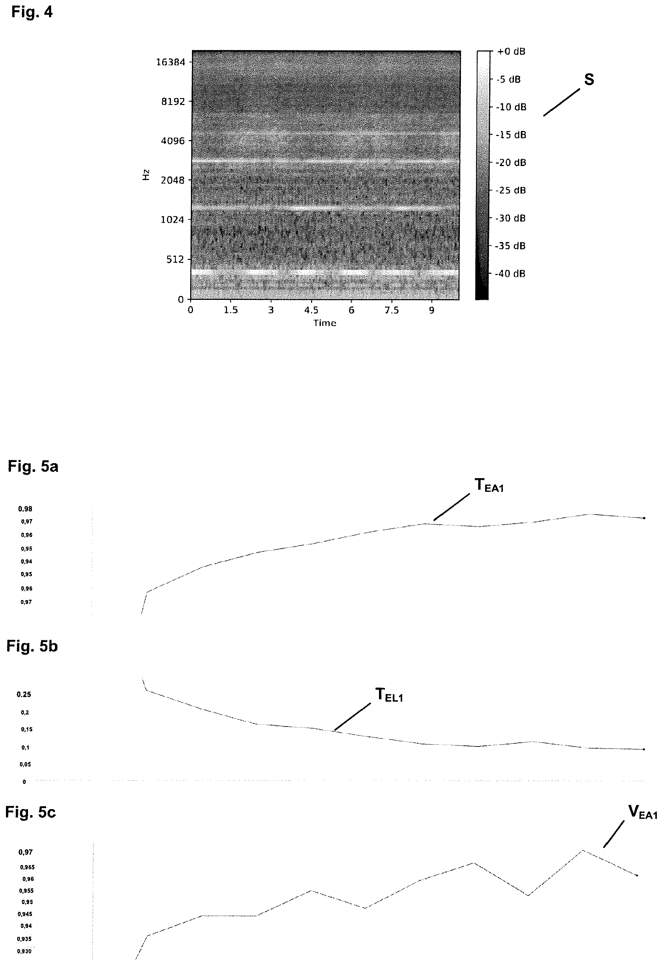

Anschließend können die Audiodaten mit Hilfe einer Fourier Transformation in Frequenzsignale umgewandelt werden. Dies kann ebenfalls von einem entsprechenden Plugin der Software durchgeführt werden. Hierbei kann insbesondere ein Spektrogramm S basierend auf den bereitgestellten Audiodaten erstellt werden, welches die Frequenzspektren der Audiodaten über einen vordefinierten Zeitraum darstellt (vgl. beispielhafte Darstellung in Fig. 4). Die jeweilige Lautstärke wird im Spektrogramm S durch die Färbung beschrieben, die Frequenz und die Zeit werden über die Position im Diagramm ausgelesen.

Nachdem Aufbereitung der Daten erfolgt anschließend das eigentliche Anlernen 14c eines neuronalen Netzwerks mit den zuvor definierten Hyperparametern und die Bewertung bzw. das Testen 14d des jeweiligen Netzwerks mittels von den Trainingsdaten verschiedenen Testdaten.

Beim Testen wird vorzugsweise ein die Erkennungsgenauigkeit des künstlichen neuronalen Netzwerks wiederspiegelnder Wert ermittelt. Anschließend können unter Variation der jeweiligen adaptierbaren Parameter im Schritt 14e die vorherigen Schritte 14a-14d wiederholt werden, um die Erkennungsgenauigkeit des resultierenden künstlichen neuronalen Netzwerks zu optimieren. Auf diese Weise werden mehrere unterschiedlich angelernte künstliche neuronale Netzwerke mit jeweils unterschiedlicher Erkennungsgenauigkeit generiert.

Hierbei ist die entsprechende Software vorzugsweise zur Konfiguration und dem Durchprobieren von einer Vielzahl von verschiedenen Parameterkombinationen, insbesondere der Vorverarbeitungsparameter und der Hyperparameter des jeweiligen neuronalen Netzwerks ausgebildet. Durch Variation der jeweiligen Parameter für die Vorverarbeitung und die Hyperparameter kann dann eine generelle Richtung für das Anlernen festgelegt werden. Dieser kann durch iteratives Vorgehen gefolgt werden, bis die erfasste Erkennungsgenauigkeit beim Testen 14d wieder abnimmt bzw. verschlechtert. An diesem Punkt ist dann eine jeweilige optimierte Konfiguration der Parameter erreicht. Die Hyperparameter, welche im Rahmen der Variation 14e variiert bzw. angepasst werden, umfassen beispielsweise die grundsätzliche Topologie bzw. Architektur des Netzwerks, beispielsweise CNN oder RNN, die Anzahl und Größer der Schichten, die Anzahl der Eingangs- und Ausgangs-Neuronen, die Anzahl der versteckten Schichten, die genaue Vernetzung der Neuronen und Schichten, eine jeweilige Aktivierungsfunktion, und/oder die Vergesslichkeit des neuronalen Netzes, ein sogenanntes Dropout. Die Vorverarbeitungsparameter umfassen beispielsweise einen Parameter, welcher bestimmt, ob die Daten normalisiert werden, Parameter, welche die genaue Art des Spektrogramms definieren, Parameter zur Festlegung der Länge und/oder der Aufteilung der Audiodaten, etc.

Die zuvor antrainierten neuronalen Netzwerke können dann in einem anschließenden Schritt 15 ausgewählt und zur Anwendung, insbesondere in einer erfindungsgemäßen Vorrichtung 10, bereitgestellt werden. Dieser Schritt kann die Darstellung 15a in einer Übersicht insbesondere hinsichtlich der Erkennungsgenauigkeit der jeweiligen Netzwerke und die eigentliche Auswahl und Bereitstellung 15b eines neuronalen Netzwerks umfassen. Die Auswahl selbst kann entweder manuell durch einen Benutzer der Software oder automatisch basierend auf der resultierenden Erkennungsgenauigkeit und/oder weiterer Parameter der antrainierten Netzwerke erfolgen.

**Fig. 5a-7c** zeigen beispielhaft mehrere Graphen, welche beim Anlernen eines künstlichen neuronalen Netzwerks erfasst werden, vorliegend beispielhaft für eine Betriebszustandserkennung einer Schleifmaschine. Die Graphen können mittels der oben beschriebenen Software beim Training bzw. Anlernen der jeweiligen Netzwerke erstellt werden. Die Graphen zeigen jeweils Verlaufsgrößen für ein "Train Epoch Accuracy" (T_{EA}) (in %), ein "Train Epoch Loss" (T_{EL}) und eine "Valuation Epoch Accuracy" (V_{EA}) (in %) über einen zeitlichen Verlauf der Trainings- bzw. Testzeit eines künstlichen neuronalen Netzwerks und ermöglichen die Beurteilung eines Lern- und Testfortschritts des jeweiligen Netzwerks, sowie die Identifizierung eines möglichen Auswendiglernens bzw. Überlernens, sogenanntes "overtraining", des Netzwerks.

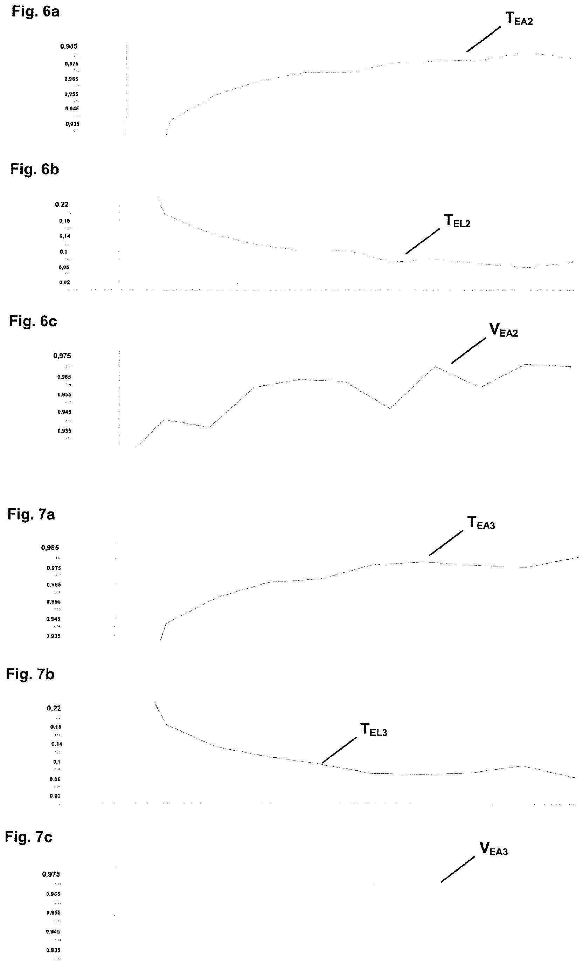

Die **Fig. 5a-5c** zeigen hierbei rein exemplarisch die oben genannten Graphen für einen ersten Trainings- und Testlauf, die **Fig. 6a-6c** und **Fig. 7a-7c** jeweils Graphen für einen zweiten und dritten Trainings- und Testlauf mit gleichbleibenden Vorverarbeitungsparametern und jeweils veränderten Hyperparametern, vorliegend einer jeweils veränderten Anzahl an LSTM Neuronen ("Long short term memory") eines durch weitere Hyperparameter definierten RNN Netzwerks.

Die Trainingsläufe gemäß den gezeigten Graphen T_{EA}, T_{EL} und V_{EA} in Fig. 5a-7c wurden mit folgenden gelichbleibenden Hyperparametern durchgeführt: 3 versteckte Schichten ("hiddden layers"), zwei LSTM Schichten, einen Klassifizier-Schicht ("dense layer"). Die Anzahl der LSTM Neuronen betrug im ersten Trainingslauf (Fig. 5a-5c) 32 Stück in der ersten LSTM Schicht und 16 Stück in der zweiten LSTM Schicht, im zweiten Trainingslauf (Fig. 6a-6c) 64 Stück in der ersten LSTM Schicht und 32 Stück in der zweiten LSTM Schicht, und im dritten Trainingslauf (Fig. 7a-7c) 128 Stück in der ersten LSTM Schicht und 64 Stück in der zweiten LSTM Schicht. Die Trainingszeit war jeweils ca. 15 min.

Bei einem Vergleich der drei verschiedenen Trainingsverläufe in den jeweiligen Fig. 5a-5c, 6a-6c und 7a-7c ist erkennbar, dass alle Trainingsverläufe von kurzer Dauer sind und eine starke Fluktuation auftritt. Das ist ein Indiz dafür, dass die Ergebnisse noch optimiert werden können. Die einzelnen Graphen zeigen keinen großen Unterschied in ihrem Lernverlauf was darauf hindeutet, dass es ein Optimierungspotenzial bei anderen Parametern als die vorliegend veränderte Anzahl und/oder Größe der Schichten gibt. Auch könnte dies ein Hinweis sein, dass die Variation oder Menge der Daten in den Trainingsdaten nicht ausreichend ist.

Fig. 5a, 5b, 5c und Fig. 6a, 6b, 6c zeigen grundsätzlich gute Ansätze für den Lernverlauf. Gemittelt bewegen sich diese Graphen in eine konstante Richtung. Die Graphen in Fig. 5c und Fig. 6c fluktuieren dabei typischerweise etwas mehr da dies Testdaten sind. Die Graphen in Fig. 7a, 7b und 7c zeigen einen etwas schlechteren Trainingsverlauf, was darauf hindeutet, dass die Größe der Layer nicht weiter erhöht werden sollte, besonders da die Genauigkeit der Vorhersage bei den Testdaten Fig. 7c scheinbar nicht mehr mit der Genauigkeit der Trainingsdaten zusammenhängt. Das kann ein Zeichen dafür sein, dass der Lernprozess nicht reibungslos abläuft und das neuronale Netzwerk bspw. angefangen hat die Trainingsdaten auswendig zu lernen.

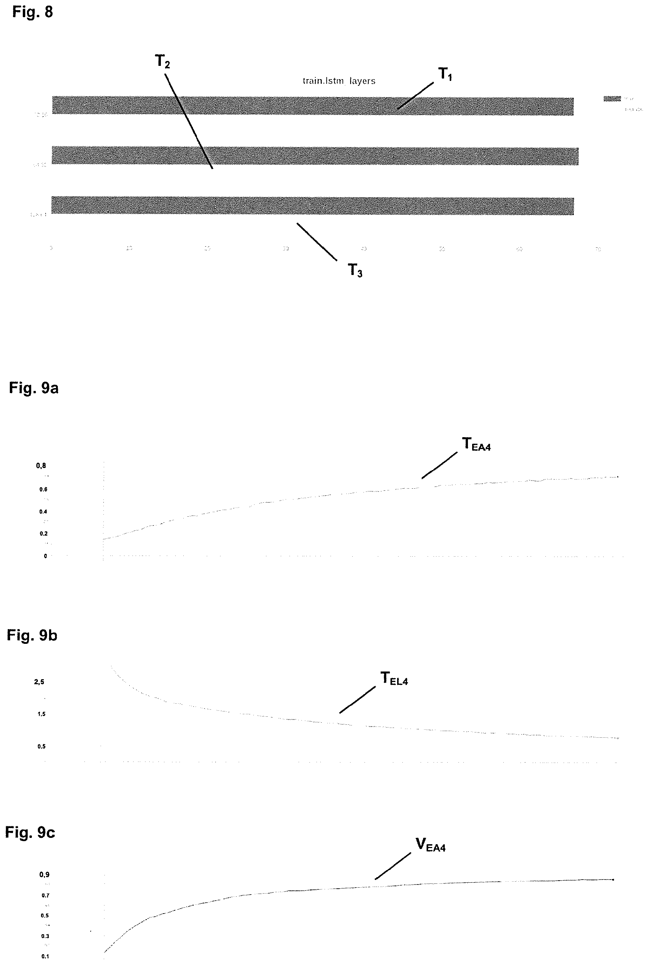

Die vorgenannten Trainingsläufe werden wie zuvor beschrieben für eine Vielzahl von variablen Vorverarbeitungs- und Hyperparametern durchgeführt, so dass eine Vielzahl unterschiedlicher künstlicher neuronaler Netzwerke für den jeweiligen Anwendungsfall getestet werden kann. Ein optimal antrainiertes künstliches neuronales Netzwerk kann dann anhand einer Vergleichs- und/oder Übersichtsdarstellung manuell oder automatisch aus den zuvor antrainierten und getesteten Netzwerken ausgesucht werden. Eine derartige Vergleichsdarstellung ist exemplarisch in **Fig. 8** gezeigt. Hierbei werden vorzugsweise wenigstens die jeweiligen Graphen für die unterschiedlichen Trainingsläufe T1, T2,..., Tn mit veränderten Parametern dargestellt. Diese zeigen vorzugsweise jeweils einen vorzugsweise prozentualen Durchschnitts- und einen Maximalwert einer Erkennungsgenauigkeit des jeweiligen Netzwerks. Das zuvor beschriebene Verfahren wird vorzugsweise für eine Vielzahl von Parameterkombinationen ausgeführt, solange bis wenigstens ein angelerntes und getestetes Netzwerk einen vordefinierten Wert für die Erkennungsgenauigkeit erreicht bzw. aufweist. Ein bevorzugter Wert für die vorzugsweise durchschnittliche Erkennungsgenauigkeit liegt bei wenigstens 70%, mehr bevorzugt bei wenigstens 80% und am bevorzugtesten bei wenigstens 90%, noch mehr bevorzugt bei wenigstens 95%.

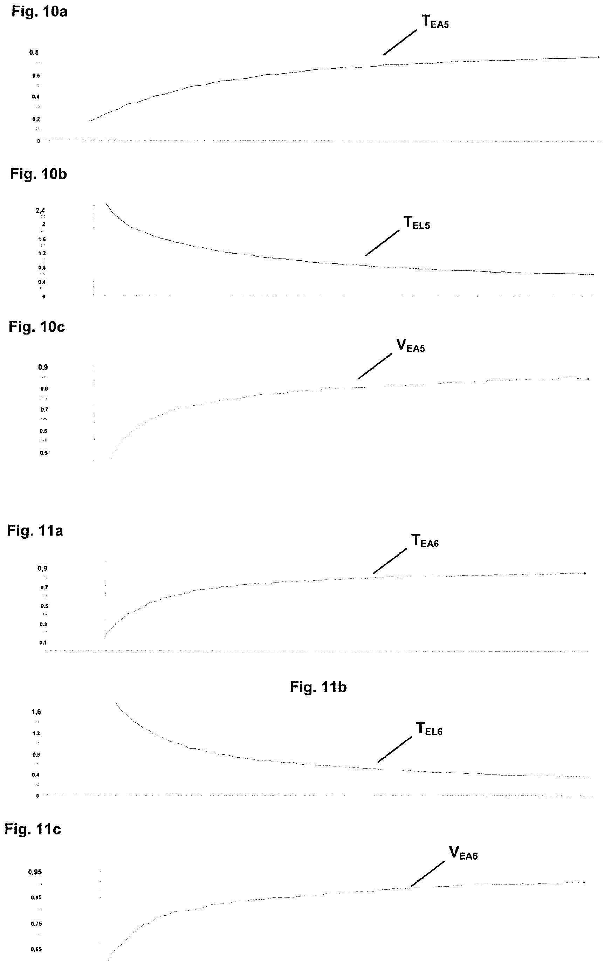

Analog zu den oben beschriebenen Trainingsläufen zeigen die **Fig. 9a-****11c** eine Darstellung von Daten bzw. Graphen erstellt beim Anlernen eines Netzwerks für eine Betriebszustandserkennung einer Zerspanmaschine, insbesondere einer Drehmaschine. Die **Fig. 9a-9c** zeigen hierbei Graphen für einen ersten Trainings- und Testlauf, die Fig. **10a-10c** und Fig. **11a-11c** jeweils Graphen für einen zweiten und dritten Trainings- und Testlauf mit gleichbleibenden Vorverarbeitungsparametern und jeweils veränderten Hyperparametern, vorliegend einer jeweils veränderten Anzahl an versteckten Schichten ("hidden layers") eines durch weitere Hyperparameter definierten CNN Netzwerks. Die Anzahl der Schichten betrug im ersten Trainingslauf (Fig. 9a-9c) 16 Stück, im zweiten Trainingslauf (Fig. 10a-10c) 32 Stück und im dritten Trainingslauf (Fig. 11a-11c) 64 Stück. Die Trainingszeit war jeweils ca. 20 min.

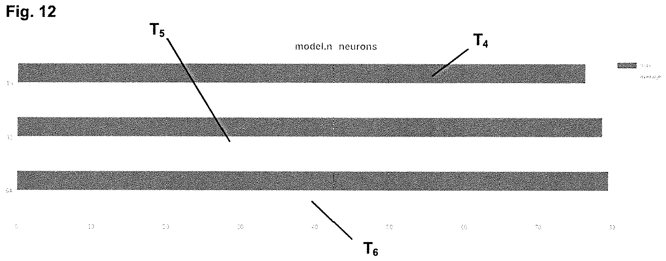

Bei einem Vergleich der drei verschiedenen Trainingsverläufe in den jeweiligen Fig. 10a-10c, 11a-11c und 12a-12c ist erkennbar, dass der Trainingsverlauf lang und gleichmäßig abläuft. Dies deutet darauf hin, dass die Vorverarbeitung der bereitgestellten Daten, diese in einen guten Zustand für die gewählte Architektur und Konfiguration des neuronalen Netzwerkes gebracht hat. Die jeweiligen Loss Graphen T_{EL} der Trainingsläufe in Fig. 9b, Fig. 10b und Fig. 11b nimmt kontinuierlich ab, selbst bis zu dem Zeitpunkt an dem das Training abgebrochen wird scheint er bei allen drei Konfiguration weiterhin zu sinken. Das deutet auf einen zu frühen Abbruch des Trainings hin. Hier ist es sinnvoll die Toleranz für einen Trainingsabbruch nach oben zu korrigieren. Dies wird durch einen Vergleich der Genauigkeiten von Training und Testen unterstützt, siehe Graphen in Fig. 9a und Fig. 9c oder Fig. 10a und Fig. 10c. Hierbei fällt auf, dass die Genauigkeit des Testens höher als die Genauigkeit des Trainings liegt, was entweder auf ein grundlegendes Problem in der Konfiguration hindeuten (was hier nicht der Fall zu seien scheint da sich alle Graphen gleichmäßig verhalten) oder darauf, dass das Netzwerk noch nicht ausgereift ist und sich noch in einer frühen Lernphase befindet. Bei dem Vergleich von Fig. 11a und Fig. 11c ist dies nicht mehr der Fall. Fig. 12 lässt zusätzlich erkennen, dass sowohl der durchschnittliche Wert als auch der Maximalwert während des Trainings bei dieser Konfiguration am höchsten ist. Das lässt darauf hindeuten dass neben der höheren Toleranz für den Abbruch des Trainings auch größere Layer ausgetestet werden sollten.

Analog zum oben beschriebenen Beispiel, kann auch für den vorliegenden Fall einer Betriebszustandserkennung einer Zerspanmaschine ein optimal antrainiertes Netzwerk anhand einer Vergleichs- und/oder Übersichtsdarstellung manuell oder automatisch aus den zuvor antrainierten und getesteten Netzwerken ausgesucht werden. Eine derartige Vergleichsdarstellung ist exemplarisch in **Fig. 12** gezeigt. Hierbei werden analog zum vorherigen Beispiel wenigstens die jeweiligen Graphen für die unterschiedlichen Trainingsläufe T4, T5, T6 dargestellt, welche vorzugsweise jeweils einen Durchschnitts- und einen Maximalwert einer Erkennungsgenauigkeit des jeweiligen Netzwerks darstellen.

Die oben beschriebenen Ausführungsformen sind lediglich beispielhaft, wobei die Erfindung keineswegs auf die in den Figuren gezeigten Ausführungsformen beschränkt ist. Insbesondere sind die erfindungsgemäße Vorrichtung und das erfindungsgemäße Verfahren nicht auf Werkzeugmaschinen, welche zur Materialabtragung mittels eines entsprechenden vorzugsweise austauschbaren Werkzeugs ausgebildet sind, beschränkt. Das zugrundeliegende Prinzip und die Auswertung bzw. Analyse mittels des spezifisch angelernten künstlichen neuronalen Netzwerks kann ebenso zur Betriebszustandsermittlung bei weiteren Bearbeitungsverfahren, beispielsweise für nicht-spanabhebenden Bearbeitungsverfahren wie Biegen, Stanzen, Walzen, etc., verwendet werden.

### Bezugszeichenliste

- 1: Werkzeugmaschine
- 1a: Werkzeug
- 2: Erfassungsmittel
- 2a: Analoges Mikrofon
- 2b: MEMS Mikrofon
- 2c: digitales Mikrofon
- 2d: Analog/Digital-Wandler
- 2e: Audio-Schnittstelle
- 3: Betriebsgeräusche
- 4: Analyseeinheit
- 4a: Vorverarbeitungseinheit
- 4b: künstliches neuronales Netzwerk
- 5: Ausgabemittel
- 5a: Steuerungsschnittstelle
- 5b: Kommunikationsschnittstelle
- 5c: Interne Speichermittel
- 5d: Externe Speichermittel
- 6: Maschinensteuerung
- 7: Datenverarbeitungs- und/oder Darstellungsmittel
- 7a: Cloud Server
- 7b: PC
- 7c: Smartphone
- 8: Gehäuse der Vorrichtung
- 9a: weitere Sensoren
- 9b: weitere Eingänge
- 10: Analysevorrichtung
- 11: Verfahren zum Anlernen
- 12: Vorbereitungshandlungen
- 13: Generierung von Trainingsdaten
- 13a: Erfassung von Betriebsgeräuschen
- 13b: Zustandsbestimmung und Zuordnung
- 14: Anlernen eines künstlichen neuronalen Netzwerks
- 14a: Definition der Parameter
- 14b: Vorverarbeitung
- 14c: Anlernen des künstlichen neuronalen Netzwerks
- 14d: Testen
- 14e: Variation der Parameter
- 15: Auswahl und Bereitstellung
- 15a: Übersichtsdarstellung
- 15b: Auswahl und Ausgabe
- S: Spektrogramm

## Patentansprüche

1. Vorrichtung zur Analyse von Betriebsgeräuschen einer Werkzeugmaschine (1) zur Ermittlung eines Betriebszustands, insbesondere eines Verschleißzustands eines Werkzeugs (1a), aufweisend:
Erfassungsmittel (2) zur Aufnahme von in einem insbesondere materialabtragenden Arbeitszustand der Werkzeugmaschine (1) entstehenden Betriebsgeräuschen (3) und Bereitstellung darauf basierender Audiodaten,
Analyseeinheit (4) zur elektronischen Verarbeitung des bereitgestellten Audiodaten mittels eines künstlichen neuronales Netzwerks (4b), welches zur Erkennung vordefinierter Betriebszustände basierend auf den bereitgestellten Audiodaten ausgebildet ist, und
Ausgabemittel (5) zur Ausgabe und/oder elektronischen Verarbeitung eines elektrischen Signals entsprechend eines ermittelten Betriebszustands.

2. Vorrichtung nach Anspruch 1, wobei die erfassten Betriebsgeräusche periodische Schallsignale, insbesondere Luftschallsignale, in einem Frequenzbereich zwischen 5 bis 20.000Hz, bevorzugt zwischen 20 bis 20.000 Hz, sind.

3. Vorrichtung nach Anspruch 1 oder 2, wobei die Analyseeinheit (4) ausgebildet ist, wenigstens zwei, vorzugsweise eine Vielzahl von vordefinierten Betriebszuständen, insbesondere Verschleißzuständen, eines Werkzeugs (1a) der Werkzeugmaschine (1) voneinander zu unterscheiden.

4. Vorrichtung nach einem der Ansprüche 1 bis 3, wobei das künstliche neuronale Netzwerk (4b) zur Erkennung von Betriebszuständen durch Vergleich und/oder durch statistische Auswertung der von den Erfassungsmitteln (2) bereitgestellten Audiodaten mit angelernten, Betriebszustände repräsentierenden Audiodaten ausgebildet ist.

5. Vorrichtung nach einem der vorhergehenden Ansprüche, wobei das künstliche neuronale Netzwerk (4b) der Analyseeinheit (4) ausgebildet ist, basierend auf mittels überwachten Lernens antrainierten Kenntnissen einen vordefinierten Betriebszustand zu erkennen und/oder wobei das künstliche neuronale Netzwerk (4b) ausgebildet ist, zuvor angelernte Kenntnisse bei der Ermittlung eines Betriebszustands aus den zugeführten Audiosignalen weiter zu verbessern.

6. Vorrichtung nach einem der vorhergehenden Ansprüche, wobei das künstliche neuronale Netzwerk (4b) ein faltendes neuronales Netzwerk (CNN) oder ein rekurrentes neuronales Netzwerk (RNN) ist und/oder wobei das künstliche neuronale Netzwerk (4b) wenigstens eine verdeckte Schicht aufweist.

7. Vorrichtung nach einem der vorhergehenden Ansprüche, wobei das künstliche neuronale Netzwerk (4b) zwischen 2 bis 10.000, vorzugsweise zwischen 2 und 1.000, Neuronen pro Schicht aufweist und/oder wobei das künstliche neuronale Netzwerk (4b) zwischen 1 bis 100, vorzugsweise zwischen 1 bis 20, verdeckte Schichten aufweist.

8. Vorrichtung nach einem der vorhergehenden Ansprüche, wobei die Analyseeinheit (4) eine Vorverarbeitungseinheit (4a) für die bereitgestellten Audiodaten aufweist, die ausgebildet ist, die Audiodaten basierend auf vordefinierten Vorverarbeitungsparametern elektronisch zu verarbeiten, insbesondere zu normalisieren, zu filtern, aufzuteilen und/oder zur Spektrogrammerstellung zu verwenden.

9. Vorrichtung nach einem der vorhergehenden Ansprüche, wobei die Ausgabemittel (5) eine Steuerungsschnittstelle (5a) zur Anbindung an eine Maschinensteuerung (6) und/oder eine Kommunikationsschnittstelle (5b) zur Anbindung an Datenverarbeitungs- und/oder Darstellungsmittel (7a,7b,7c) aufweisen.

10. Vorrichtung nach einem der vorhergehenden Ansprüche, wobei die Analyseeinheit (4) wenigstens zwei, vorzugsweise mehrere unterschiedliche ausgebildete künstliche neuronale Netzwerke umfasst, welche jeweils auf die Erkennung unterschiedlicher Arten von vordefinierten Betriebszuständen basierend auf den bereitgestellten Audiodaten und/oder zur Analyse von unterschiedlichen Arten von Betriebsgeräuschen ausgebildet sind.

11. Vorrichtung nach einem der vorhergehenden Ansprüche, wobei die Analyseeinheit (4) einen konfigurierbaren Trainingsmodus aufweist, zur Aufnahme verschiedener Betriebsgeräusche und manueller oder automatischer Zuordnung der Betriebsgeräusche zu einem jeweiligen Betriebszustand und/oder zum vorzugsweise überwachtem Anlernen eines künstlichen neuronalen Netzwerks mit verschiedenen Betriebszustände repräsentierenden Betriebsgeräuschen.

12. Verfahren zur Ermittlung eines Betriebszustands einer Werkzeugmaschine, insbesondere eines Verschleißzustands eines Werkzeugs, aufweisend die Schritte:
Aufnahme der in einem insbesondere materialabtragenden Arbeitszustand der Werkzeugmaschine (1) entstehenden Betriebsgeräusche und Bereitstellung von darauf basierenden Audiodaten,
elektronische Verarbeitung der bereitgestellten Audiodaten mittels eines künstlichen neuronalen Netzwerks, welches zur Erkennung vordefinierter Betriebszustände, insbesondere Verschleißzustände, basierend auf den bereitgestellten Audiodaten ausgebildet ist, und
Ausgabe eines elektrischen Signals basierend auf der elektronischen Verarbeitung durch das künstliche neuronale Netzwerk und entsprechend einem detektierten Betriebszustand.

13. Verfahren nach Anspruch 12, wobei die elektronische Verarbeitung eine Vorverarbeitung der bereitgestellten Audiodaten umfasst, bei welcher die Audiodaten auf Basis von vordefinierten Parametern normalisiert, gefiltert, aufgeteilt, und/oder zu Spektrogrammen verarbeitet werden.

14. Verfahren nach Anspruch 12 oder 13, wobei die elektronische Verarbeitung in Echtzeit erfolgt.

15. Verfahren (11) zum Anlernen und Bereitstellen eines künstlichen neuronalen Netzwerkes zur Ermittlung eines Betriebszustands einer Werkzeugmaschine, insbesondere eines Verschleißzustands, basierend auf den Betriebsgeräuschen der Werkzeugmaschine, aufweisend die Schritte:
Generierung von Trainingsdaten (13) durch Aufnahme (13a) einer Vielzahl von unterschiedlichen Betriebsgeräuschen (3) einer Werkzeugmaschine (1), insbesondere in einem materialabtragenden Arbeitszustand der Werkzeugmaschine (1), und manuelle oder automatische Zuordnung (13b) von auf den unterschiedlichen Betriebsgeräuschen (3) basierenden Audiodaten zu vordefinierten Betriebszuständen, insbesondere hinsichtlich eines jeweiligen Verschleißzustands eines Werkzeugs (1a) der Werkzeugmaschine (1),
elektronische Vorverarbeitung (14b) der Trainingsdaten mittels adaptierbarer Vorverarbeitungsparameter, wobei die Vorverarbeitung insbesondere ein Normalisieren, ein Filtern, ein Aufteilen und/oder eine Erstellung von Spektrogrammen basierend auf den bereitgestellten Audiodaten umfasst,
Anlernen (14c) eines künstlichen neuronalen Netzwerks definiert durch adaptierbare Hyperparameter mit den Trainingsdaten,
Testen (14d) der angelernten Kenntnisse des künstlichen neuronalen Netzwerks mittels von den Trainingsdaten verschiedenen Testdaten und Erfassung eines die Erkennungsgenauigkeit des künstlichen neuronalen Netzwerks wiederspiegelnden Werts,
Variation (14e) der jeweiligen adaptierbaren Vorverarbeitungsparameter für die elektronische Vorverarbeitung und/oder Variation der jeweiligen adaptierbaren Hyperparameter des künstlichen neuronalen Netzwerks zur Optimierung der Erkennungsgenauigkeit,
Auswahl und Bereitstellung (15) eines künstlichen neuronalen Netzwerks basierend auf den jeweiligen ermittelten Erkennungsgenauigkeitswerten.
